# EUROPEAN PATENT SPECIFICATION

(11) **EP 1 992 514 B1**
(45) Date of publication and mention of the grant of the patent: **22.06.2011**
(21) Application number: 08251703.8
(22) Date of filing: 14.05.2008
(51) Int. Cl.: B60K 11/08, F01P 5/06

(54) **Straddle-type vehicle**
Ein im Grätschsitz zu benutzendes Fahrzeug
Véhicule de type à enfourcher

(30) Priority: 17.05.2007 JP 2007131630
(43) Date of publication of application: 19.11.2008
(73) Proprietor: Yamaha Hatsudoki Kabushiki Kaisha, Iwata-shi, Shizuoka 438-8501 (JP)
(72) Inventor: Kawakami, Satoshi, 2500 Shingai, Iwata-shi Shizuoka-ken 438-8501 (JP); Miyoshi, Nobuyuki, 2500 Shingai, Iwata-shi Shizuoka-ken 438-8501 (JP)
(74) Representative: Lamb, Martin John Carstairs

(56) References cited:
- JP-A- 1 233 186
- JP-A- 9 249 170
- JP-A- 2002 173 072
- US-A1- 2002 112 680

## Description

### FIELD OF THE INVENTION

The present invention relates a straddle-type vehicle provided with a radiator arranged laterally of the vehicle.

### BACKGROUND TO THE INVENTION

Vehicles are known which are provided with a grille (radiator cover) among scooter type small-sized vehicles (straddle-type vehicles). An example of this is disclosed in Japanese Utility Model Registration No. 2576872, where a scooter type small-sized vehicle comprises a radiator having a core surface arranged in a state of having a predetermined angle in a traveling direction rather than laterally of a vehicle body and a grille arranged outside the core surface of the radiator. The grille of the scooter type small-sized vehicle is formed with a plurality of plate-shaped members formed in a state of having a predetermined angle in a traveling direction rather than laterally of a vehicle body, and a plurality of intake ports, respectively, are formed between the plurality of plate-shaped members to be opened substantially in one direction.

With the grille (radiator cover) of the scooter type small-sized vehicle (straddle-type vehicle) disclosed in Japanese Utility Model Registration No. 2576872, however, the plurality of intake ports are opened substantially in one direction, so that only an air from one side inflows. Therefore, a problem arises in that it is difficult to improve the intake efficiency of cooling air to the radiator mounted on the scooter type small-sized vehicle.

Another straddle-type vehicle is known by US 2002/0112680 including the features of preamble of claim 1.

The invention has been thought of in order to solve the problems described above and has its object to provide a radiator cover of a straddle-type vehicle capable of improving the intake efficiency of an air for cooling of a radiator, and a straddle-type vehicle provided with the same.

### SUMMARY OF THE INVENTION

Aspects of the present invention are set forth in the independent claim. Preferred but non-essential features of the invention are set forth in the dependent claims.

With the radiator cover of the straddle-type vehicle described in claim 1, a plurality of vent holes are provided to cover an outer side of a core surface of a radiator with the core surface arranged laterally of the vehicle and to be respectively opened in different directions, whereby the plurality of vent holes, respectively, opened in different directions enable taking in an air for cooling of the radiator in a plurality of directions. Consequently, it is possible to improve the intake efficiency of an air for cooling of the radiator.

The vent holes may comprise a first vent hole opened in a traveling direction, and a second vent hole opened in an opposite direction to the traveling direction. With such construction, it is possible to readily take in an air for cooling of the radiator both in the traveling direction and in an opposite direction to the traveling direction.

The radiator cover may further comprise a baffle member provided on a side of the radiator to lead an air, which is taken in from the plurality of vent holes to cool the radiator, to the core surface of the radiator. With such construction, it is possible to inhibit an air, which is taken in from the plurality of vent holes to cool the radiator, from going to other portions than the core surface of the radiator, so that the radiator can be improved in cooling efficiency.

The vent holes may comprise a first vent hole opened in the traveling direction to take in at least a part of a travel wind, and a second vent hole opened in an opposite direction to the traveling direction to take in an intake wind of an intake fan arranged on an opposite surface to the core surface of the radiator. With such construction, it is possible to readily cause a travel wind to inflow from the first vent hole to take in an air for cooling of the radiator and to cause an intake wind of the intake fan to inflow from the second vent hole to take in an air for cooling of the radiator.

The first vent hole may be provided to be opened in a direction inclined at a predetermined angle to a vehicle width direction in the traveling direction, and the second vent hole may be provided to be opened in a direction inclined at a predetermined angle to the vehicle width direction in an opposite direction to the traveling direction. With such construction, it is possible to cause a travel wind to readily inflow from the first vent hole opened in a direction inclined at a predetermined angle to a vehicle width direction in the traveling direction and to cause an intake wind of the intake fan to readily inflow from the second vent hole opened in a direction inclined at a predetermined angle to the vehicle width direction in an opposite direction to the traveling direction.

The radiator cover of a straddle-type vehicle, in which the vent holes comprising the first vent hole and the second vent hole are provided, may further comprise a plurality of first plate-shaped members provided on the first vent hole and a plurality of second plate-shaped members provided on the second vent hole, and the plurality of first plate-shaped members are arranged to be smaller in angle of inclination to the core surface than the plurality of second plate-shaped members. With such construction, mud or the like can be inhibited from entering the first vent hole, into which mud or the like is liable to enter in the traveling direction as compared with the second vent hole opened in an opposite direction to the traveling direction, in the traveling direction.

In the radiator cover of a straddle-type vehicle, in which the plurality of first plate-shaped members are provided on the first vent hole, the plurality of first plate-shaped members, respectively, may be arranged not to overlap one another as viewed in plan view. With such construction, it is possible to inhibit inward flow of the travel wind from being obstructed while inhibiting mud or the like from entering inside from the first vent hole.

The radiator cover may further comprise a wall portion provided below the second vent hole, through which the intake wind of the intake fan is taken in, to cover a lower portion of the core surface of the radiator, and the vent holes may further comprise a third vent hole provided on the wall portion to be opened in a direction, in which at least a part of the travel wind can be taken in. With such construction, the third vent hole in addition to the first vent hole enables a travel wind to inflow, so that it is possible to further improve the intake efficiency.

The first vent hole may be arranged to face a portion of the core surface in the traveling direction, the second vent hole may be arranged to face a portion of an upper portion of the core surface in an opposite direction to the traveling direction, and the third vent hole may be arranged to face a portion of a lower portion of the core surface in an opposite direction to the traveling direction. With such construction, the first vent hole enables an air for cooling of a side of the core surface in the traveling direction to be taken in, the second vent hole enables an air for cooling of a portion of the upper portion of the core surface on an opposite side to the traveling direction to be taken in, and the third vent hole enables an air for cooling of a portion of the lower portion of the core surface in an opposite direction to the traveling direction to be taken in.

The third vent hole may be formed to extend obliquely downward in the traveling direction. With such construction, the third vent hole readily enables a travel wind to be led below the core surface of the radiator, which is provided to face the radiator cover.

The radiator cover may further comprise a baffle member provided on a side of the wall portion toward the radiator to lead a travel wind, which is taken in from the first vent hole and the third vent hole, to the lower portion of the core surface of the radiator. With such construction, the baffle portion can inhibit a travel wind, which inflows from the third vent hole, from going rearward, so that the travel wind inflowing from the third vent hole can be efficiently led to the lower portion of the core surface of the radiator.

The radiator cover may further comprise a beam portion provided between the first vent hole and the second vent hole to partition the first vent hole and the second vent hole. With such construction, it is possible to improve the mechanical strength against an impact from outside.

The beam portion may be formed to project outermost in an opposite direction to a direction opposed to the core surface of the radiator. With such construction, it is possible to enlarge a space between the core surface of the radiator and the back surface of the radiator cover, so that an air taken into the space between the core surface of the radiator and the back surface of the radiator cover can be convected. Thereby, an air as taken in can be distributed over the whole core surface of the radiator, so that it is possible to improve the radiator in cooling efficiency.

The radiator cover may further comprise a cap cover portion, which covers a radiator cap of the radiator. With such construction, it is possible to readily protect the radiator cap of the radiator.

With such construction, it is possible to obtain a straddle-type vehicle comprising a radiator cover, by which an air for cooling of a radiator can be improved in intake efficiency.

### BRIEF DESCRIPTION OF THE DRAWINGS

These and other aspects of the present invention will now be described, by way of example only, with reference to the accompanying drawings, in which:
Fig. 1 is a side view showing the whole construction of a motorcycle according to an embodiment of the invention;
Fig. 2 is a cross sectional view illustrating the construction of a periphery of a radiator of the motorcycle, according to the embodiment, shown in Fig. 1;
Fig. 3 is a perspective view illustrating the construction of a radiator cover of the motorcycle, according to the embodiment, shown in Fig. 1;
Fig. 4 is a front view illustrating the construction of the radiator cover of the motorcycle, according to the embodiment, shown in Fig. 1;
Fig. 5 is a cross sectional view taken along the line 100-100 in Fig. 4;
Fig. 6 is a cross sectional view taken along the line 200-200 in Fig. 4;
Fig. 7 is a perspective view illustrating the construction of the radiator cover of the motorcycle, according to the embodiment, shown in Fig. 1;
Fig. 8 is a rear view illustrating the construction of the radiator cover of the motorcycle, according to the embodiment, shown in Fig. 1; and
Fig. 9 is a plan view illustrating the construction of the radiator cover of the motorcycle, according to the embodiment, shown in Fig. 1.

### DETAILED DESCRIPTION OF THE DRAWINGS

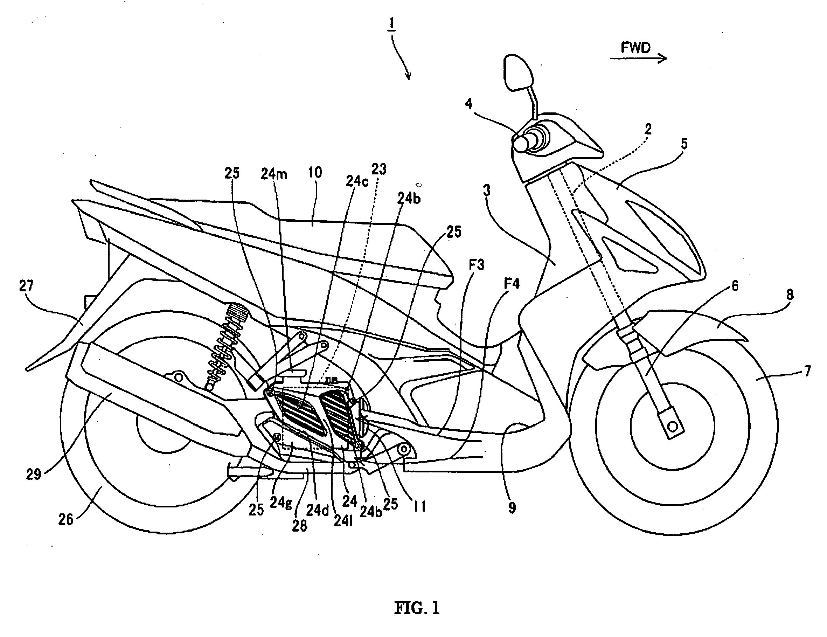

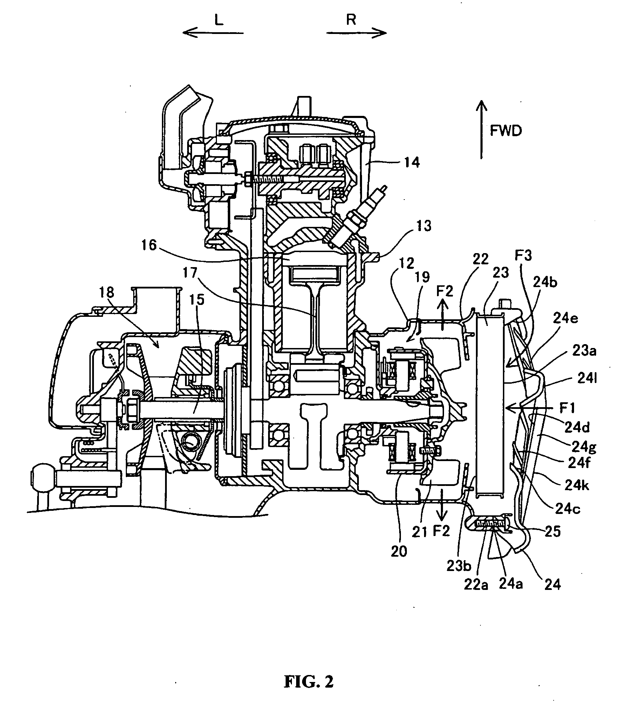

Fig. 1 is a side view showing a whole construction of a motorcycle according to an embodiment of the invention. Figs. 2 to 9 are views illustrating a construction of a periphery of a radiator cover of the motorcycle, according to the embodiment, shown in Fig. 1. In addition, the embodiment will be described with respect to a scooter type motorcycle as an example of a straddle-type vehicle of the invention. In the drawings, FWD indicates the front in a traveling direction of a motorcycle. The construction of the motorcycle 1 according to the embodiment of the invention will be described in detail with reference to Figs. 1 to 9.

In the motorcycle 1, a main frame 3 is fixed to a lower portion of a head pipe 2, as shown in Fig. 1. The main frame 3 extends rearward from a lower portion thereof. The head pipe 2 and the main frame 3 constitute a body frame.

A handle 4 is mounted to an upper portion of the head pipe 2 to be able to turn. Also, a front cowl 5 covering the front of the head pipe 2 is provided forwardly of the head pipe 2. A pair of front forks 6 having a suspension for absorption of shocks is arranged below the head pipe 2. A front wheel 7 is rotatably mounted to lower portions of the pair of front forks 6. A front fender 8 is arranged above the front wheel 7.

A foot rest 9 is arranged above a central portion of the main frame 3 and a seat 10 is arranged above a rear portion of the main frame 3. An engine 11 is arranged below the rear portion of the main frame 3. As shown in Fig. 2, the engine 11 includes a crank case 12, a cylinder 13 mounted forwardly (an arrow FWD direction) of the crank case 12, and a cylinder head 14 mounted in a manner to close a forward (the arrow FWD direction) opening of the cylinder 13.

A crank shaft 15 is arranged rotatably on the crank case 12 to extend in a vehicle width direction (an arrow L direction and an arrow R direction). Mounted to the crank shaft 15 is a connecting rod 17 for connection of a piston 16 arranged in the cylinder 13 and the crank shaft 15. A change gear mechanism 18 is provided on a side of the crank shaft 15 in the arrow L direction, and a power-generating unit 19 is provided on a side of the crank shaft 15 in the arrow R direction. The power-generating unit 19 includes a rotating member 20, which rotates with the crank shaft 15, the rotating member 20 being mounted to an end of the crank shaft 15 in the arrow R direction. An intake fan 21 is provided on the rotating member 20 and rotates about an axis of rotation of the rotating member 20 together with the rotating member 20. As the crank shaft 15 rotates, the intake fan 21 rotates together with the rotating member 20, thereby functioning to draw air in a direction F1 from a rear vent hole 24c described later and to flow in a direction F2 around the intake fan 21.

A bracket 22 made of aluminum is mounted to a side of the crank case 12 in the arrow R direction so as to cover the intake fan 21. A radiator 23 is mounted to a side of the bracket 22 in the arrow R direction. Specifically, the radiator 23 is arranged so that a core surface 23a faces in the arrow R direction (laterally of a vehicle) and a surface portion 23b on an opposite side to the core surface 23a is opposed to the intake fan 21. That is, the radiator 23 is arranged so that air caused to flow in a direction F1 by the intake fan 21 flows substantially perpendicularly to the core surface 23a.

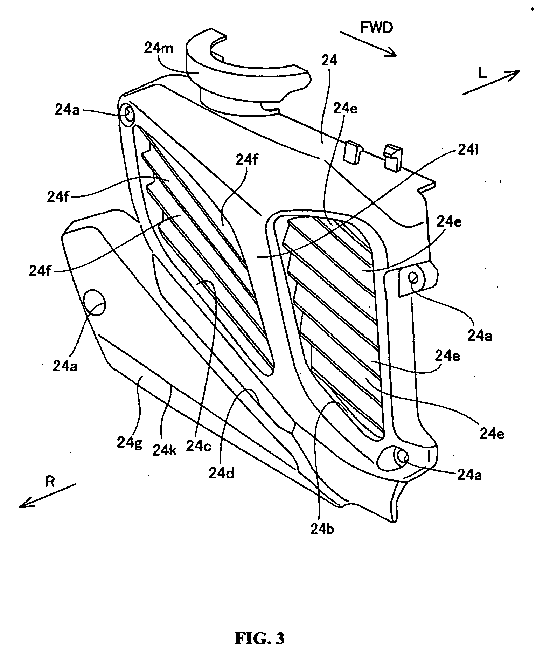

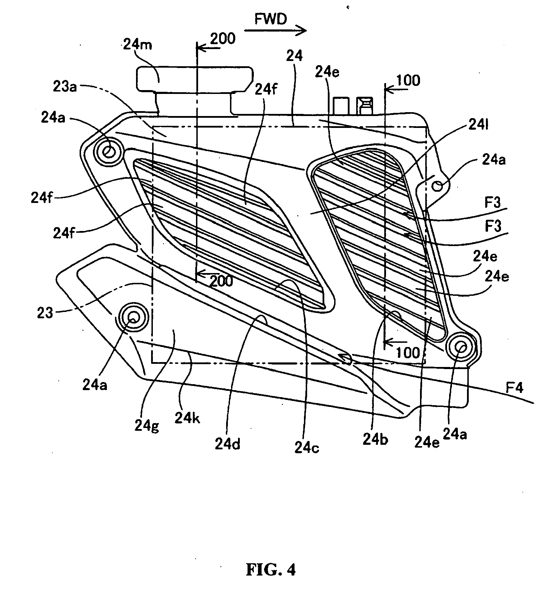

In the embodiment, a radiator cover 24 made of a resin is arranged on a side of the core surface 23a of the radiator 23 in the arrow R direction so as to cover an outside (a side in the arrow R direction) of the core surface 23a. The radiator cover 24 is an example of a "radiator cover of a straddle-type vehicle" of the invention. As shown in Figs. 3 and 4, the radiator cover 24 is formed with four screw insertion holes 24a. As shown in Fig. 2, screw members 25 are screwed into threaded holes 22a of the bracket 22 through the screw insertion holes 24a whereby the radiator cover 24 is mounted to the bracket 22.

The radiator cover 24 is provided with a front vent hole 24b, the rear vent hole 24c, and a lower vent hole 24d. The front vent hole 24b is an example of a "first vent hole" of the invention and the rear vent hole 24c is an example of a "second vent hole" of the invention. Also, the lower vent hole 24d is an example of a "third vent hole" of the invention. The front vent hole 24b, the rear vent hole 24c, and the lower vent hole 24d constitute vent holes of the invention. The front vent hole 24b, the rear vent hole 24c, and the lower vent hole 24d, respectively, are formed to be opposed to the core surface 23a of the radiator 23 (see Fig. 4) and to be opened in different directions.

The front vent hole 24b is opened in the traveling direction (the arrow FWD direction) and formed to take in at least a part of a travel wind F3 (see Figs. 1 and 4). Specifically, the front vent hole 24b is provided on the front side (a side in the arrow FWD direction) of the radiator cover 24 so as to be opened in a direction inclined at a predetermined angle in a traveling direction (the arrow FWD direction) relative to the vehicle width direction (the arrow L direction and the arrow R direction) (see Fig. 3). As shown in Fig. 4, the front vent hole 24b is arranged in opposition to a portion of the core surface 23a of the radiator 23 in the traveling direction (the arrow FWD direction) to function to lead air (travel wind F3) to a portion of the core surface 23a in the traveling direction (the arrow FWD direction).

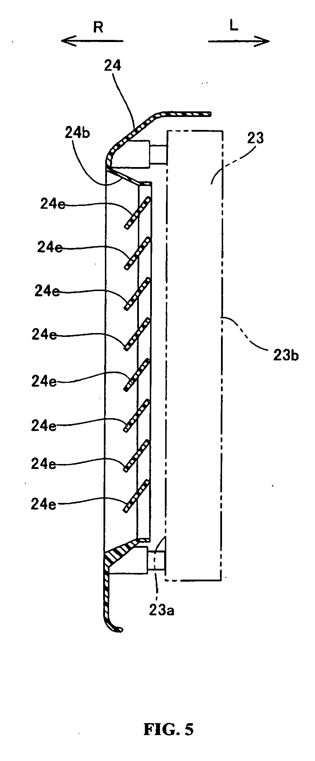

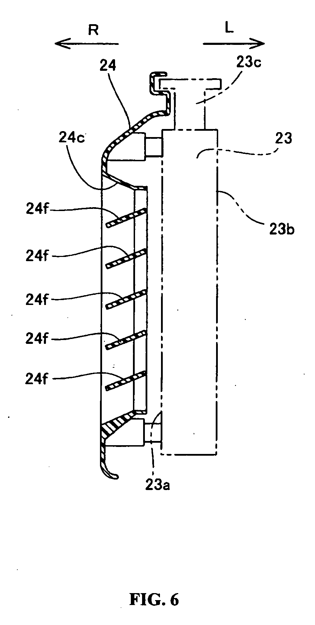

The front vent hole 24b is provided with a plurality of plate-shaped members (fins) 24e, which are integrally formed with the radiator cover 24. The plurality of plate-shaped members 24e, respectively, are arranged to extend rearward and obliquely upward from the front of the opening of the front vent hole 24b and not to overlap one another as viewed in plan view (i.e., the plate-shaped members 24e are arranged in a stacked manner, one directly above the other). The plurality of plate-shaped members 24e, respectively, are formed at a predetermined angle of inclination to the core surface 23a. As shown in Figs. 5 and 6, the plurality of plate-shaped members 24e (see Fig. 5), respectively, are arranged so as to have a predetermined angle of inclination smaller than a predetermined angle of inclination, at which plate-shaped members 24f of the rear vent hole 24c (see Fig. 6) are inclined, relative to the core surface 23a. That is, the plate-shaped members 24e (see Fig. 5) of the front vent hole 24b are arranged so that it is more difficult for mud or the like to enter (the arrow L direction) the radiator cover 24 as compared with the plate-shaped members 24f of the rear vent hole 24c (see Fig. 6).

The rear vent hole 24c is formed as shown in Figs. 3 and 4 to be opened generally in opposition to the traveling direction (the arrow FWD direction) and to take in an intake wind F1 (see Fig. 2) of the intake fan 21 (see Fig. 2) . Specifically, as shown in Fig. 3, the rear vent hole 24c is provided rearwardly of the radiator cover 24 so as to be opened in a direction inclined at a predetermined angle in an opposite direction to the traveling direction (the arrow FWD direction) to the vehicle width direction (the arrow L direction and the arrow R direction) (see Fig. 2). Also, as shown in Fig. 4, the rear vent hole 24c is arranged so as to face an opposite side of the upper portion of the core surface 23a of the radiator 23 to the traveling direction (the arrow FWD direction) and functions to lead air (intake wind F1) (see Fig. 2) to an opposite portion of the upper portion of the core surface 23a to the traveling direction (the arrow FWD direction).

The rear vent hole 24c is provided with a plurality of plate-shaped members (fins) 24f, which are integrally formed with the radiator cover 24. The plurality of plate-shaped members 24f, respectively, are arranged to extend rearward and obliquely upward from the front of the opening of the rear vent hole 24c and not to overlap one another as viewed in plan view (i.e., the plate-shaped members 24f are arranged in a stacked manner, one directly above the other). The plurality of plate-shaped members 24f, respectively, are formed at a predetermined angle of inclination to the core surface 23a. Also, as shown in Figs. 5 and 6, the plurality of plate-shaped members 24f (see Fig. 6), respectively, are arranged so as to have a predetermined angle of inclination larger than a predetermined angle of inclination, at which the plate-shaped members 24e (see Fig. 5) of the front vent hole 24b are inclined, relative to the core surface 23a. That is, the plate-shaped members 24f (see Fig. 6) of the rear vent hole 24c are arranged to more readily permit air to enter inside (the arrow L direction) the radiator cover 24 as compared with the plate-shaped members 24e of the front vent hole 24b (see Fig. 5).

As shown in Figs. 1 and 4, the lower vent hole 24d is provided to be opened in a direction, in which at least a part of a travel wind F4 (see Fig. 1) passing below the front vent hole 24b can be taken in, at a location of the radiator cover 24 which is below the rear vent hole 24c. Specifically, a wall portion 24g formed to project in the arrow R direction (see Fig. 3) and to cover a lower portion of the core surface 23a of the radiator 23 is provided below the rear vent hole 24c and the lower vent hole 24d is formed between the rear vent hole 24c and the wall portion 24g. Also, the lower vent hole 24d is formed to extend obliquely downward in the traveling direction (the arrow FWD direction). The lower vent hole 24d is arranged to face an opposite side of the lower portion of the core surface 23a of the radiator 23 to the traveling direction (the arrow FWD direction) and to lead an air (travel wind F4) (see Fig. 1) to an opposite portion of the lower portion of the core surface 23a to the traveling direction (the arrow FWD direction).

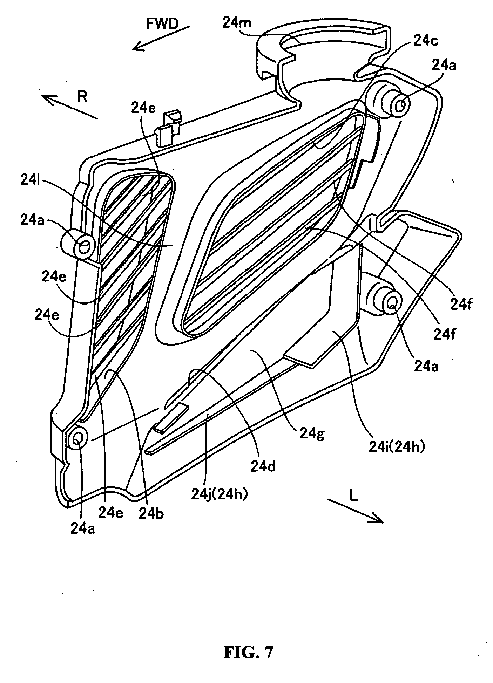

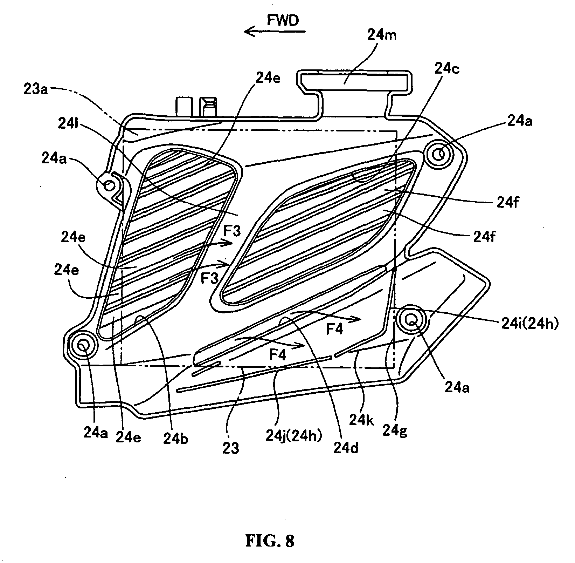

As shown in Figs. 7 and 8, a baffle portion 24h formed to lead air flowing from the lower vent hole 24d to a lower portion of the core surface 23a of the radiator 23 (see Fig. 8) is provided on the radiator cover 24 on the wall portion 24g on a back surface side (an arrow L direction) (see Fig. 7) of the radiator cover 24. The baffle portion 24h is an example of a "baffle member" of the invention. The baffle portion 24h is provided to project on a back surface side (the arrow L direction) (see Fig. 7) of the wall portion 24g and includes a rear baffle portion 24i, which extends downward from a region of a rear end of the lower vent hole 24d, and a lower baffle portion 24j, which extends forward (the arrow FWD direction) and obliquely downward. The rear baffle portion 24i functions to lead air to an opposite portion of the lower portion of the radiator 23 (Fig. 8) to the traveling direction (the arrow FWD direction) while inhibiting air (travel wind F4) (see Fig. 8) flowing rearward from the lower vent hole 24d. The lower baffle portion 24j functions to lead air to the opposite portion of the lower portion of the radiator 23 (Fig. 8) to the traveling direction (the arrow FWD direction) while inhibiting air (travel wind F4) (see Fig. 8) flowing downward from the lower vent hole 24d. At least a part of the lower baffle portion 24j is formed on a boundary portion 24k between two surfaces included in the wall portion 24g.

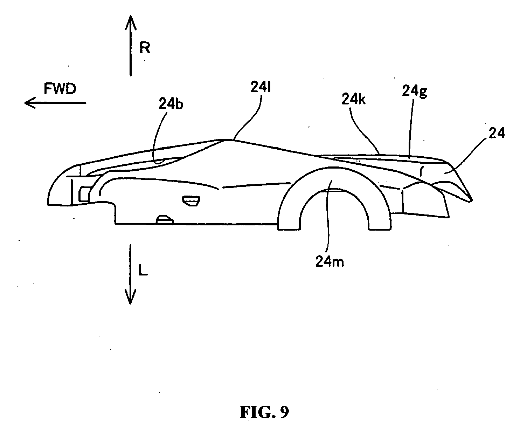

As shown in Figs. 3 and 4, a beam portion 241 for partitioning of the front vent hole 24b and the rear vent hole 24c is provided between the front vent hole 24b and the rear vent hole 24c. As shown in Figs. 3 and 9, the beam portion 241 is formed to extend vertically between the front vent hole 24b and the rear vent hole 24c and to project outermost on an opposite side (a side in the arrow R direction) of the radiator 23 to the core surface 23a. Also, a cap cover portion 24m formed to cover a radiator cap 23c (see Fig. 6) is provided on a rear, upper portion of the radiator cover 24.

A rear wheel 26 is provided rotatably rearwardly of the engine 11 and a rear fender 27 is mounted above the rear wheel 26 to cover an upper portion of the rear wheel 26. An exhaust pipe 28 is connected to the engine 11 and is directed rearward and connected to a muffler 29.

By providing a plurality of vent holes (the front vent hole 24b, the rear vent hole 24c, and the lower vent hole 24d) opened in different directions on the radiator 23, of which the core surface 23a is arranged in the arrow R direction (laterally of a vehicle), so as to cover an outside (the arrow R direction) of the core surface 23a, the plurality of vent holes (the front vent hole 24b, the rear vent hole 24c, and the lower vent hole 24d) opened in different directions can take in air for cooling of the radiator 23 in a plurality of directions. Consequently, it is possible to improve the intake efficiency of air for cooling of the radiator 23.

By providing, on a vent hole, the front vent hole 24b, which is opened in the traveling direction (the arrow FWD direction) and takes in at least a part of the travel wind F3, and the rear vent hole 24c, which is opened in an opposite direction to the traveling direction (the arrow FWD direction) and takes in the intake wind F1 of the intake fan 21 arranged on an opposite surface (the arrow L direction) of the radiator 23 to the core surface 23a, it is possible to readily cause the travel wind F3 to inflow from the front vent hole 24b to take in an air for cooling of the radiator 23 and to cause the intake wind F1 of the intake fan 21 to inflow from the rear vent hole 24c to take in an air for cooling of the radiator 23.

By making angles of inclination of the plurality of plate-shaped members 24e to the core surface 23a smaller than angles of inclination of the plate-shaped members 24f to the core surface 23a, mud or the like can be inhibited from entering the front vent hole 24b, into which mud or the like is liable to enter in the traveling direction (the arrow FWD direction) as compared with the rear vent hole 24c opened in an opposite direction to the traveling direction (the arrow FWD direction), in the traveling direction (the arrow FWD direction).

By arranging the plurality of plate-shaped members 24e, respectively, not to overlap one another as viewed in plan view, it is possible to inhibit inward flow of the travel wind F3 from being obstructed while inhibiting mud or the like from entering inside from the front vent hole 24b.

By providing on the wall portion 24g the lower vent hole 24d, which is provided to be opened in a direction, in which at least a part of the travel wind F4 can be taken in, the lower vent hole 24d in addition to the front vent hole 24b enables the travel wind F4 to inflow, so that it is possible to further improve the intake efficiency.

By arranging the front vent hole 24b in opposition to a portion of the core surface 23a in the traveling direction (the arrow FWD direction), arranging the rear vent hole 24c in opposition to an opposite portion of the upper portion of the core surface 23a to the traveling direction (the arrow FWD direction), and arranging the lower vent hole 24d in opposition to an opposite portion of the lower portion of the core surface 23a to the traveling direction (the arrow FWD direction), the front vent hole 24b enables an air for cooling of a side of the core surface 23a in the traveling direction (the arrow FWD direction) to be taken inside, the rear vent hole 24c enables an air for cooling of an opposite portion of the upper portion of the core surface 23a to the traveling direction (the arrow FWD direction) to be taken inside, and the lower vent hole 24d enables an air for cooling of an opposite portion of the lower portion of the core surface 23a to the traveling direction (the arrow FWD direction) to be taken inside.

By providing the baffle portion 24h, which is provided on a side (the arrow L direction) of the wall portion 24g toward the radiator 23 to lead air, which inflows from the lower vent hole 24d, to the lower portion of the core surface 23a of the radiator 23, the baffle portion 24h can inhibit the travel wind F4, which inflows from the lower vent hole 24d, from going rearward, so that the travel wind F4 inflowing from the lower vent hole 24d can be efficiently led to the lower portion of the core surface 23a of the radiator 23.

By forming the beam portion 241 so as to project outermost on an opposite side (a side in the arrow R direction) of the radiator 23 to the core surface 23a, it is possible to enlarge a space between the core surface 23a of the radiator 23 and the back surface of the radiator cover 24, so that air as taken in can be convected in the space between the core surface 23a of the radiator 23 and the back surface of the radiator cover 24. Thereby, air as taken in can be distributed over the whole core surface 23a of the radiator 23, so that the radiator 23 can be improved in cooling efficiency.

It should be understood that the embodiment disclosed herein is exemplary in all respects and not limitative. The scope of the invention is not indicated by the descriptions of the embodiment described above but by the claims, and all changes which come within the meaning and range of equivalence of the claims are intended to be embraced therein.

While the embodiment shows a scooter type motorcycle as an example of a straddle-type vehicle provided with a radiator cover, the invention is not limited thereto but applicable to other vehicles, such as three-wheeler, ATV (All Terrain Vehicle), etc., as far as they comprise a straddle-type vehicle provided with a radiator cover.

Also, while the embodiment shows an example, in which a front vent hole is opened in the traveling direction to take in at least a part of the travel wind, the invention is not limited thereto but a vent hole may be formed to take in at least a part of the travel wind through, for example, a duct as far as the vent hole can take in at least a part of the travel wind.

Also, while the embodiment shows an example, in which the core surface of the radiator is arranged laterally of a vehicle body, the invention is not limited thereto but a core surface of a radiator may be arranged in a direction inclined at a predetermined angle to a vehicle width direction in a traveling direction or in an opposite direction to the traveling direction.

Also, while the embodiment shows an example, in which vent holes are provided in three locations, the invention is not limited thereto but vent holes may be provided in four or more locations, or may be provided only in two locations.

Also, while the embodiment shows an example, in which an intake wind of the intake fan is taken in through the rear vent hole, the invention is not limited thereto but an air, other than an intake wind of an intake fan, such as a travel wind, etc. may be caused to flow into the rear vent hole.

Also, while the embodiment shows an example, in which the plate-shaped members are arranged on the front vent hole and the rear vent hole, the invention is not limited thereto but plate-shaped members may be also arranged on the lower vent hole.

Also, while the embodiment shows an example, in which the baffle portion formed to lead an air flowing from the lower vent hole to the lower portion of the core surface of the radiator is provided on the back surface side of the radiator cover and the baffle portion comprises the rear baffle portion, which extends downward from a neighborhood of a rear end of the lower vent hole, and the lower baffle portion, which is connected to the lower end of the rear baffle portion and extends forward and obliquely downward, the invention is not limited thereto but a baffle portion may be provided on the back surface side of the radiator cover except the rear baffle portion and the lower baffle portion, for example, rearwardly of the rear vent hole on the back surface side of the radiator cover.

Also, while the embodiment shows an example, in which the cap cover portion is provided in a manner to cover the radiator cap of the radiator, the invention is not limited thereto but the provision of the cap cover portion, which covers the radiator cap of the radiator, may be dispensed with.

### Description of Reference Numerals and Signs

1: motorcycle (vehicle)
21: intake fan
23: radiator
23a: core surface
23c: radiator cap
24: radiator cover (radiator cover of straddle-type vehicle)
24b: front vent hole (vent hole, first vent hole)
24c: rear vent hole (vent hole, second vent hole)
24d: lower vent hole (vent hole, third vent hole)
24e: plate-shaped member (first plate-shaped member)
24f: plate-shaped member (second plate-shaped member)
24g: wall portion
24h: baffle portion (baffle member)
24i: rear baffle portion (baffle member)
24j: lower baffle portion (baffle member)
241: beam portion
24m: cap cover portion
F1: intake wind
F3: travel wind
F4: travel wind

## Claims

1. A straddle-type vehicle (1) comprising:
a radiator (23) with a core surface (23a) arranged laterally of the vehicle (1); and
a radiator cover (24) arranged to cover an outer side of the core surface (23a) of the radiator (23) **characterized in that** it comprises a plurality of vent holes (24b, 24c, 24d) formed to face the core surface (23a) and, respectively, opened in different directions, wherein a portion of the radiator cover is provided between at least a first vent hole (24b) and a second vent hole (24c) to partition the first and second vent holes and formed to project in an opposite direction to a direction opposed to the core surface (23a) of the radiator (23).

2. A straddle-type vehicle (1) according to claim 1, wherein:
the first vent hole (24b) is opened in a travelling direction, and
the second vent hole (24c) is opened in an opposite direction to the travelling direction.

3. A straddle-type vehicle (1) according to claim 2, wherein the first vent hole (24b) is adapted to take in at least a part of a travel wind (F3), and the second vent hole (24c) is adapted to take in an intake wind (F1) of an intake fan (21) arranged on an opposite surface to the core surface (23a) of the radiator (23).

4. A straddle-type vehicle (1) according to claim 2 or 3, wherein the first vent hole (24b) is provided to be opened in a direction inclined at a predetermined angle to a vehicle width direction in the travelling direction, and the second vent hole (24c) is provided to be opened in a direction inclined at a predetermined angle to the vehicle width direction in an opposite direction to the travelling direction.

5. A straddle-type vehicle (1) according to claim 2, 3 or 4, further comprising:
a plurality of first plate-shaped members (24e) provided in the first vent hole (24b); and
a plurality of second plate-shaped members (24f) provided in the second vent hole (24c),
wherein the plurality of first plate-shaped members (24e) are arranged to be smaller in angle of inclination to the core surface (23a) than the plurality of second plate-shaped members (24f).

6. A straddle-type vehicle (1) according to claim 5, wherein the plurality of first plate-shaped members (24e), respectively, are arranged not to overlap one another as viewed in plan view.

7. A straddle-type vehicle (1) according to any one of claims 2 to 6, further comprising:
a wall portion (24g) provided below the second vent hole (24c), through which the intake wind (F1) of the intake fan (21) is taken in, to cover a lower portion of the core surface (23a) of the radiator (23); and
a third vent hole (24d) provided on the wall portion (24g) to be opened in a direction in which at least a part of the travel wind (F4) can be taken in.

8. A straddle-type vehicle (1) according to claim 7, wherein:
the first vent hole (24b) is arranged to face a portion of the core surface (23a) in the travelling direction;
the second vent hole (24c) is arranged to face a portion of an upper portion of the core surface (23a) in an opposite direction to the travelling direction; and
the third vent hole (24d) is arranged to face a portion of a lower portion of the core surface (23a) in an opposite direction to the travelling direction.

9. A straddle-type vehicle (1)) according to claim 7 or 8, wherein the third vent hole (24d) is formed to extend obliquely downward in the travelling direction.

10. A straddle-type vehicle (1) according to any preceding claim, further comprising a baffle member (24h) provided on a radiator side of the cover (24) and adapted to lead cooling air taken in from the plurality of vent holes to the core surface (23a) of the radiator (23).

11. A straddle-type vehicle (1) according to any one of claims 7 to 9, further comprising a baffle member (24h) provided on a radiator side of the wall portion (24g) and adapted to lead a travel wind taken in from the first and third vent holes (24b, 24d) to the lower portion of the core surface (23a) of the radiator (23).

12. A straddle-type vehicle (1) according to any preceding claim, further comprising a cap cover (24m) portion adapted to cover a radiator cap (23c) of the radiator (23).

## Patentansprüche

1. Reitsitz-Fahrzeug (1), das Folgendes umfasst:
einen Kühler (23) mit einer Teilblockfläche (23a), der seitlich von dem Fahrzeug (1) angeordnet ist, und
eine Kühlerabdeckung (24), die dafür angeordnet ist, eine Außenseite der Teilblockfläche (23a) des Kühlers (23) abzudecken, **dadurch gekennzeichnet, dass** sie mehrere Lüftungslöcher (24b, 24c, 24d) umfasst, die dafür geformt sind, der Teilblockfläche (23a) gegenüberzuliegen und jeweils in unterschiedlichen Richtungen geöffnet sind, wobei ein Abschnitt der Kühlerabdeckung zwischen wenigstens einem ersten Lüftungsloch (24b) und einem zweiten Lüftungsloch (24c) bereitgestellt wird, um das erste und das zweite Lüftungsloch zu unterteilen, und so geformt ist, das er in einer entgegengesetzten Richtung zu einer Richtung, entgegengesetzt zu der Teilblockfläche (23a) des Kühlers (23), vorspringt.

2. Reitsitz-Fahrzeug (1) nach Anspruch 1, wobei:
das erste Lüftungsloch (24b) in einer Fahrtrichtung geöffnet ist und
das zweite Lüftungsloch (24c) in einer entgegengesetzten Richtung zu der Fahrtrichtung geöffnet ist.

3. Reitsitz-Fahrzeug (1) nach Anspruch 2, wobei das erste Lüftungsloch (24b) dafür eingerichtet ist, wenigstens einen Teil eines Fahrtwindes (F3) aufzunehmen, und das zweite Lüftungsloch (24c) dafür eingerichtet ist, einen Ansaugwind (F1) eines Ansauggebläses (21) aufzunehmen, das auf einer entgegengesetzten Fläche zu der Teilblockfläche (23a) des Kühlers (23) angeordnet ist.

4. Reitsitz-Fahrzeug (1) nach Anspruch 2 oder 3, wobei das erste Lüftungsloch (24b) so bereitgestellt wird, dass es in einer Richtung, in einem vorbestimmten Winkel geneigt zu einer Fahrzeug-Breitenrichtung in der Fahrtrichtung, geöffnet ist, und das zweite Lüftungsloch (24c) so bereitgestellt wird, dass es in einer Richtung, in einem vorbestimmten Winkel geneigt zu einer Fahrzeug-Breitenrichtung in einer entgegengesetzten Richtung zu der Fahrtrichtung, geöffnet ist.

5. Reitsitz-Fahrzeug (1) nach Anspruch 2, 3 oder 4, das ferner Folgendes umfasst:
mehrere erste plattenförmige Elemente (24e), die in dem ersten Lüftungsloch (24b) bereitgestellt werden, und
mehrere zweite plattenförmige Elemente (24f), die in dem zweiten Lüftungsloch (24c) bereitgestellt werden,
wobei die mehreren ersten plattenförmigen Elemente (24e) so angeordnet sind, dass sie sich in einem kleineren Neigungswinkel zu der Teilblockfläche (23a) befinden als die mehreren zweiten plattenförmigen Elemente (24f).

6. Reitsitz-Fahrzeug (1) nach Anspruch 5, wobei die mehreren ersten plattenförmigen Elemente (24e) jeweils so angeordnet sind, dass sie einander, gesehen in der Draufsicht, nicht überlappen.

7. Reitsitz-Fahrzeug (1) nach einem der Ansprüche 2 bis 6, das ferner Folgendes umfasst:
einen Wandabschnitt (24g), der unterhalb des zweiten Lüftungslochs (24c), durch das der Ansaugwind (F1) des Ansauggebläses (21) aufgenommen wird, bereitgestellt wird, um einen unteren Abschnitt der Teilblockfläche (23a) des Kühlers (23) abzudecken, und
ein drittes Lüftungsloch (24d), das so an dem Wandabschnitt (24g) bereitgestellt wird, dass es in einer Richtung geöffnet ist, in der wenigstens ein Teil des Fahrtwindes (F4) aufgenommen werden kann.

8. Reitsitz-Fahrzeug (1) nach Anspruch 7, wobei:
das erste Lüftungsloch (24b) so angeordnet ist, dass es einem Abschnitt der Teilblockfläche (23a) in der Fahrtrichtung gegenüberliegt,
das zweite Lüftungsloch (24c) so angeordnet ist, dass es einem Abschnitt eines oberen Abschnitts der Teilblockfläche (23a) in einer entgegengesetzten Richtung zu der Fahrtrichtung gegenüberliegt, und
das dritte Lüftungsloch (24d) so angeordnet ist, dass es einem Abschnitt eines unteren Abschnitts der Teilblockfläche (23a) in einer entgegengesetzten Richtung zu der Fahrtrichtung gegenüberliegt.

9. Reitsitz-Fahrzeug (1) nach Anspruch 7 oder 8, wobei das dritte Lüftungsloch (24d) so geformt ist, dass es sich schräg nach unten in der Fahrtrichtung erstreckt.

10. Reitsitz-Fahrzeug (1) nach einem der vorhergehenden Ansprüche, das ferner ein Ablenkelement (24h) umfasst, das auf einer Kühlerseite der Kühlerabdeckung (24) bereitgestellt wird und dafür eingerichtet ist, die von den mehreren Lüftungslöchern aufgenommene Kühlluft zu der Teilblockfläche (23a) des Kühlers (23) zu leiten.

11. Reitsitz-Fahrzeug (1) nach einem der Ansprüche 7 bis 9, das ferner ein Ablenkelement (24h) umfasst, das auf einer Kühlerseite des Wandabschnitts (24g) bereitgestellt wird und dafür eingerichtet ist, einen von dem ersten und dem dritten Lüftungsloch (24b, 24d) aufgenommenen Fahrtwind zu dem unteren Abschnitt der Teilblockfläche (23a) des Kühlers (23) zu leiten.

12. Reitsitz-Fahrzeug (1) nach einem der vorhergehenden Ansprüche, das ferner eine Kappenabdeckungsabschnitt (24m) umfasst, der dafür eingerichtet ist, eine Kühlerkappe (23c) des Kühlers (23) abzudecken.

## Revendications

1. Véhicule du type à enfourcher (1), comprenant :
un radiateur (23) avec une surface de faisceau (23a), agencé latéralement par rapport au véhicule (1) ; et
un couvercle de radiateur (24), destiné à recouvrir un côté externe de la surface de faisceau (23a) du radiateur (23), **caractérisé en ce qu'**il comprend plusieurs trous d'évent (24b, 24c, 24d) formés de sorte à faire face à la surface de faisceau (23a) et ouverts respectivement dans différentes directions, une partie du couvercle du radiateur étant agencée entre au moins un premier trou d'évent (24b) et un deuxième trou d'évent (24c) pour séparer les premier et deuxième trous d'évent, et étant formée de sorte à déborder dans une direction opposée, vers une direction opposée à la surface de faisceau (23a) du radiateur (23).

2. Véhicule du type à enfourcher (1) selon la revendication 1, dans lequel :
le premier trou d'évent (24b) est ouvert dans une direction du déplacement ; et
le deuxième trou d'évent (24c) est ouvert dans une direction opposée à la direction du déplacement.

3. Véhicule tu type à enfourcher (1) selon la revendication 2, dans lequel le premier trou d'évent (24b) est adapté pour aspirer au moins une partie du vent induit par le déplacement (F3), le deuxième trou d'évent (24c) étant adapté pour aspirer l'air d'aspiration (F1) d'un ventilateur d'aspiration (21) agencé sur une surface opposée à la surface de faisceau (23a) du radiateur (23).

4. Véhicule du type à enfourcher (1) selon les revendications 2 ou 3, dans lequel le premier trou d'évent (24b) est destiné à être ouvert dans une direction inclinée à un angle prédéterminé vers une direction de la largeur du véhicule, dans la direction du déplacement, le deuxième trou d'évent (24c) étant destiné à être ouvert dans une direction inclinée à un angle prédéterminée par rapport à la direction de la largeur du véhicule, dans une direction opposée à la direction du déplacement.

5. Véhicule du type à enfourcher (1) selon les revendications 2, 3 ou 4, comprenant en outre :
plusieurs premiers éléments en forme de plaque (24e) agencés dans le premier trou d'évent (24b) ; et
plusieurs deuxièmes éléments en forme de plaque (24f), agencés dans le deuxième trou d'évent (24c) ;
les plusieurs premiers éléments en forme de plaque (24e) étant agencés de sorte à former un angle d'inclinaison plus petit par rapport à la surface du faisceau (23a) que les plusieurs deuxièmes éléments en forme de plaque (24f).

6. Véhicule du type à enfourcher (1) selon la revendication 5, dans lequel les plusieurs premiers éléments en forme de plaque (24e) sont respectivement agencés de sorte à ne pas se chevaucher mutuellement, vus dans une vue en plan.

7. Véhicule du type à enfourcher (1) selon l'une quelconque des revendications 2 à 6, comprenant en outre :
une partie de paroi (24g), agencée au-dessous du deuxième trou d'évent (24c), à travers lequel l'air d'aspiration (F1) du ventilateur d'aspiration (21) est aspiré, pour recouvrir une partie inférieure de la surface de faisceau (23a) du radiateur (23) ; et
un troisième trou d'évent (24d), agencé sur la partie de paroi (24g), destiné à être ouvert dans une direction dans laquelle au moins une partie du vent induit par le déplacement (F4) peut être aspirée.

8. Véhicule du type à enfourcher (1) selon la revendication 7, dans lequel :
le premier trou d'évent (24b) est agencé de sorte à faire face à une partie de la surface de faisceau (23a) dans la direction du déplacement ;
le deuxième trou d'évent (24c) est agencé de sorte à faire face à une partie d'une partie supérieure de la surface de faisceau (23a), dans une direction opposée à la direction du déplacement ; et
le troisième trou d'évent (24d) est agencé de sorte à faire face à une partie d'une partie inférieure de la surface de faisceau (23a), dans une direction opposée à la direction du déplacement.

9. Véhicule du type à enfourcher (1) selon les revendications 7 ou 8, dans lequel le troisième trou d'évent (24d) est formé de sorte à s'étendre de manière oblique et vers le bas dans la direction du déplacement.

10. Véhicule du type à enfourcher (1) selon l'une quelconque des revendications précédentes, comprenant en outre un élément déflecteur (24h), agencé sur un côté du radiateur du couvercle du radiateur (24) et adapté pour guider l'air de refroidissement aspiré à partir des plusieurs trous d'évent vers la surface de faisceau (23a) du radiateur (23).

11. Véhicule du type à enfourcher (1) selon l'une quelconque des revendications 7 à 9, comprenant en outre un élément de déflecteur (24h), agencé sur un côté du radiateur de la partie de paroi (24g) et adapté pour guider le vent induit par le déplacement, aspiré à partir des premier et troisième trous d'évent (24b, 24d) vers la partie inférieure de la surface de faisceau (23a) du radiateur (23).

12. Véhicule du type à enfourcher (1) selon l'une quelconque des revendications précédentes, comprenant en outre une partie de couverture de bouchon (24m), adaptée pour recouvrir un bouchon de radiateur (23c) du radiateur (23).
